(19) Europäisches Patentamt
European Patent Office
Office européen des brevets

(11) EP 1 329 032 B1

(12) EUROPEAN PATENT SPECIFICATION

(45) Date of publication and mention of the grant of the patent:
**27.12.2006 Bulletin 2006/52**

(21) Application number: **01983340.9**

(22) Date of filing: **19.10.2001**

(51) Int Cl.:
***H04B 1/707*** *(2006.01)*

(86) International application number:
**PCT/CA2001/001488**

(87) International publication number:
**WO 2002/033838 (25.04.2002 Gazette 2002/17)**

# (54) MULTI-USER DETECTOR FOR DIRECT SEQUENCE - CODE DIVISION MULTIPLE ACCESS (DS/CDMA) CHANNELS

MEHRBENUTZERDETEKTOR FÜR DIREKTSEQUENZ-KODEMULTIPLEXVIELFACHZUGRIFFKANÄLE

DETECTEUR MULTI-UTILISATEUR POUR CANAUX D'ACCES MULTIPLE PAR REPARTITION DE CODE A SEQUENCE DIRECTE

(84) Designated Contracting States:
**DE ES FR GB**

(30) Priority: **20.10.2000 US 242050 P**

(43) Date of publication of application:
**23.07.2003 Bulletin 2003/30**

(73) Proprietor: **Nortel Networks Limited**
**St.Laurent, Quebec H4S 2A9 (CA)**

(72) Inventors:
- **TONG, Wen**
  **Ottawa, Ontario K2C 4A7 (CA)**
- **VOJCIC, Branmir**
  **Bethesda, MD 20817 (US)**
- **PICKHOLTZ, Raymond**
  **Fairfax, VA 22031 (US)**
- **DAMNJANOVIC, Jelena**
  **San Diego, CA 92122 (US)**

(74) Representative: **Coyle, Philip Aidan et al**
**F. R. KELLY & CO.**
**27 Clyde Road**
**Ballsbridge**
**Dublin 4 (IE)**

(56) References cited:
**EP-A- 0 849 888** **EP-A- 0 863 618**

- **DATABASE INSPEC [Online] INSTITUTE OF ELECTRICAL ENGINEERS, STEVENAGE, GB; BIGLOO A M Y ET AL: "Slotted DS/SSMA ALOHA with packet combining in a Rayleigh fading channel" Database accession no. 5411516 XP002198347 & 1996 IEEE 46TH VEHICULAR TECHNOLOGY CONFERENCE. MOBILE TECHNOLOGY FOR THE HUMAN RACE (CAT. NO.96CH35894), PROCEEDINGS OF VEHICULAR TECHNOLOGY CONFERENCE - VTC, ATLANTA, GA, USA, 28 APRIL-1 MAY 1996, pages 1710-1714 vol.3, 1996, New York, NY, USA, IEEE, USA ISBN: 0-7803-3157-5**
- **SOUISSI S ET AL: "Packet combining error control for CDMA systems" IEEE ISSSTA '94. IEEE THIRD INTERNATIONAL SYMPOSIUM ON SPREAD SPECTRUM TECHNIQUES AND APPLICATIONS (CAT. NO.94TH0604-9), PROCEEDINGS OF IEEE 3RD INTERNATIONAL SYMPOSIUM ON SPREAD SPECTRUM TECHNIQUES AND APPLICATIONS (ISSSTA'94), OULU, FINLAND, 4-6 JU, pages 248-252 vol.1, XP002198346 1994, New York, NY, USA, IEEE, USA ISBN: 0-7803-1750-5**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 329 032 B1

## Description

### Field of the Invention

The present invention relates to a multi-user detector for direct sequence - code division multiple access (DS/CDMA) channels and is particularly concerned with such a detector for use with packet retransmission.

### Background of the Invention

The automatic repeat request (ARQ) protocol is common technique used to handle transmission errors incurred by a noisy channel. In most implementations of the ARQ protocol, its sole purpose is error detection. When one or more errors are detected in the received data block, a retransmission request is sent back to the originating transmitter and the erroneous block is discarded. The main drawback of the ARQ schemes is that, especially in case of low signal-to-noise ratio (SNR), the number of retransmissions needed before correct reception may be high, leading to the unacceptably low throughputs. The various modifications of the base-line ARQ protocol, with a goal of enhancing performance, have been proposed in the literature [1], [2], [3]. The major improvement over the standard ARQ protocol can be achieved through the use of the rejected packets by combining them into a single more reliable packet. There are two basic approaches to combine multiple received packets: code combining and diversity combining. The code combining, originally proposed by Chase [4], assumes combining performed at the code-word level, where N packets encoded at rate R create a single packet with code rate R/N. Using rate-compatible punctured convolutional codes and code combing [5], [6] it is possible to get virtually any code rate appropriate to accommodate current channel conditions. The diversity combining involves bit-by-bit combining of multiple packet copies, resulting in a single packet with improved SNR. Although not as powerful as the code combining, the diversity combining is much simpler to implement.

Multiuser detection for direct sequence code division multiple access (DS/CDMA) systems are known [7], [8]. A conventional DS/CDMA receiver considers each user separately, and all interfering users are treated as wide-band noise. In contrast, the approach in multiuser detection is to take into account the structure of the multiuser interference. It has been shown in [9] that the optimum multiuser detector (MUD) offers considerable advantage over the conventional detector, at the expense of the exponential complexity in the number of users. Various MUDs, such as decorrelator [10], MMSE detector [11], and two-stage detector [12], [13], have been proposed that provide performance-complexity trade-offs. While they have polynomial complexity with the number of users and offer substantial performance gains over the conventional detector, they still provide sub-optimal performance.

### Summary of the Invention

An object of the present invention is to provide improved multi-user detection (MUD) in direct sequence code division multiple access (DS/CDMA) channels.

Accordingly, the present invention provides an asynchronous DS/CDMA system including a receiver having multi-user detecting and packet combining.

In accordance with an aspect of the present invention there is provided a multi-user detector for wireless communications comprising a first stage having a first packet combiner and a first decoder, and a second stage having a second packet combiner and a second decoder.

In accordance with an aspect of the present invention there is provided a receiver for wireless communications comprising a multi-user detector having a packet combiner and a decoder.

Embodiments of the present invention include a two-stage detector, where in the first stage, in order to improve tentative decisions for the interference cancellation, the packets are combined and then decoded.

A first embodiment of the present invention includes soft input/soft output Maximum A Posteriori Probability (MAP) decoding of the combined packets. The decoder output is used in the second stage for soft interference cancellation. Then, the combining is performed once again, before the final decoding.

A second embodiment of the present invention includes hard decision Viterbi decoding. The decoder output is used in the second stage for hard interference cancellation. Then, the combining is performed once again, before the final decoding.

### Brief Description of the Drawings

The present invention will be further understood from the following detailed description in which:

Fig. 1 illustrates in a block diagram, a multi-user detector in accordance with an embodiment of the present invention;

Fig. 2 illustrates in a functional block diagram an iterative multi-user detector (MUD) with a forward error correction (FEC) soft decoder in accordance with an embodiment of the present invention;

Fig. 3 illustrates in a block diagram an iterative MUD with the FEC hard decoder;

Fig. 4 graphically illustates packet error probability versus number of active users in frequency selective Rayleigh fading channel with power control, finite number of quantization levels and imperfect timing, amplitude and phase estimation;

Fig. 5 graphically illustrates packet error probability versus number of active users in frequency selective Rayleigh fading channel with power control, infinite number of quantization levels and perfect knowledge of timing, amplitude and phase;

Fig. 6 graphically illustrates bit error rates for the embodiment of Fig. 1 compared to a typical rake receiver as a function of number of users per sector;

Fig. 7 graphically illustrates packet error rates for various embodiments of the present invention compared to a typical rake receiver as a function of users per sector;

Fig. 8 illustrates the iterative MUD with soft decoder of Fig. 2, coupled to a single antenna; and

Fig. 9 illustrated the iterative MUD with soft decoder of Fig. 2, coupled to a plurality of antennas.

**Detailed Description of the Preferred Embodiment**

Referring to Fig. 1 there is illustrated in a block diagram a multi-user detector (MUD) in accordance with an embodiment of the present invention. The MUD 10 includes a rake receiver 12 having a plurality of outputs 14 coupled to a packet combiner 16 and a parallel interference cancellation (PIC) block 18. The output of the packet combiner 16 are applied to a soft input soft output (SISO) decoder 20. The SISO decoder 20 has a plurality of outputs 22 for decoded values. The plurality of outputs 22 are coupled to the PIC block 18. The output of the PIC block 18 is then input into the second packet combiner 24, the output of which is applied as input to a second SISO decoder 26. The output of the second SISO decoder is input to a CRC check 28. A decision block 30 allows output of the received data packet at 32 if no error is found, otherwise the packet is sent to packet buffer 48 and an ARQ is sent to the transmitter, requesting retransmission of the packet.

In operation, the first embodiment of the present invention includes soft input/soft output maximum a posteriori probability (MAP) decoding of the combined packets. The decoder output is used in the second stage for soft interference cancellation. Then, the combining is performed once again, before the final decoding.

A second embodiment of the present invention includes hard decision Viterbi decoding. The decoder output is used in the second stage for hard interference cancellation. Then, the combining is performed once again, before the final decoding.

After the multiuser detection and packet combining, the packets are decoded and checked for errors using cyclic redundancy check (CRC) code. In the presence of errors, the combiners preserve the combined version of the current erroneous packet and its previous transmissions and negative acknowledgment (NACK) to the originating transmitter is sent. When a packet is error free, the combiners are cleared and positive acknowledgment is sent to the corresponding transmitter.

We assume forward error correction (FEC) with convolutional codes and dual-channel QPSK modulation, i.e. separate BPSK on I- and Q-channel. The I and Q branches are then spread to the chip rate with two different channelization codes. For the asynchronous transmission, the received signal in the $m^{th}$ coded bit interval is modeled as Equation (1):

$$r(t)=\sum_{k=1}^{K}A_k b_k(t-\tau_k)S_{I,k}(t-\tau_k)\cdot\cos(\omega_c(t-\tau_k)+\theta_k(t))$$

$$+\sum_{k=1}^{K}A_k b_k(t-\tau_k)S_{Q,k}(t-\tau_k)\cdot\sin(\omega_c(t-\tau_k)+\theta_k(t))$$

$$+n(t),$$

where K is the number of users, $A_k$ and $b_k(t)$ represent the received amplitude for the $k^{th}$ user and its received coded bit at time t, respectively. The signature sequences for the 1 and Q branches are denoted by $S_{i,k}$ (t) and $S_{Q,k}$ (t), respectively. n(t) is additive white Gaussian noise (AWGN) with two-sided power spectral density (psd) No/2, Tk is the delay and $\varepsilon_k(t)$ is the phase of the $k^{th}$ user. Each user's signature sequence is normalized over its interval T, Equation (2):

$$\int_0^T S_{1,k}(t)^2\,dt=1, k\varepsilon\{1,\ldots,\kappa\}$$

$$\int_0^T S_{Q,k}(t)^2\,dt=1, k\varepsilon\{1,\ldots,\kappa\}$$

After low-pass filtration, assuming that the users' phases are known, and despreading, the signal in the I branch of the $k^{th}$ user in the $m^{th}$ interval becomes, Equation (3):

$$r_{k,m}^{I}=\int_{\tau_k+(m-1)T}^{\tau_k+mT} r_{BB,k}^{I}(t)S_{I,k}(t-\tau_k)\,dt$$

$$=\frac{1}{2}A_k T b_{k,m}$$

$$+\sum_{\substack{j=1\\ j\neq k}}^{\kappa}\frac{1}{2}A_j T\left[b_{j,m-1}R_{II,(j,k)}^{(1)}(\tau_j-\tau_k)+b_{j,m}R_{II,(j,k)}^{(2)}(\tau_j-\tau_k)\right]$$

$$\cdot\cos(\omega_c(\tau_k-\tau_j)+\varphi_{k,j})$$

$$\sum_{j=1}^{\kappa}\frac{1}{2}A_j T\left[b_{j,m-1}R_{Q,(j,k)}^{(1)}(\tau_j-\tau_k)+b_{j,m}R_{Q,(j,k)}^{(2)}(\tau_j-\tau_k)\right]$$

$$\cdot\sin(\omega_c(\tau_k-\tau_j)+\varphi_{k,j})$$

$$+\frac{1}{\sqrt{2}}n_{c,k}^{I}$$

where $r^1_{BB,k}$ is the base-band signal of the $k^{th}$ user in the I branch, $b_{k,m}$ is the coded bit of the $k^{th}$ user in the $m^{th}$ interval, and $\varphi_{kj}(t)=\theta_j(t)-\theta_k(t)$. $R_{II,(j,k)}^{(1)}(\tau_j-\tau_k) and R_{II,(j,k)}^{(2)}(\tau_j-\tau_k)$ are the partial crosscorrelations between the signature sequences of the $j^{th}$ and the $k^{th}$ user in the I branch, while $R_{QI,(j,k)}^{(1)}(\tau_j-\tau_k) and R_{QI,(j,k)}^{(2)}(\tau_j-\tau_k)$ are the partial

crosscorrelations between the signals of the j$^{th}$ and the l$^{th}$ user in the Q and I branch, respectively. In a similar way, just by switching I and Q notations, we can obtain $r_{k,m}^{Q}$. Combining of the I and Q branch signals yields, Equation (4):

$$\begin{aligned} r_{k,m} &= r_{k,m}^{I} + r_{k,m}^{Q} \\ &= A_k T b_{k,m} + MAI + n_{k,m} \end{aligned}$$

where MAI denotes over all multiple access interference and $n_{k,m}$ is the Gaussian random variable with two sided psd $N_o/2$.

Conventional detector treats MAI as a wide-band noise. No attempt is made to exploit the structure of MAI. After combining the output of the matched filter in I and Q branches (as given by equation (4)) the signal is combined with the previous unsuccessful transmissions, Equation (5):

$$r_{k,n}^{comb} = \sum_{l=1}^{L_k} A_k^l T b_{k,m} + \sum_{l=1}^{L_k} MAI^l + \sum_{l=1}^{L_k} n_{k,m} - L_k + 1$$

where $L_k$ is the number of transmissions of the k$^{th}$ user, and superscript l denotes the l$^{th}$ transmission. The combined signal is simply passed to the ordinary soft input hard output Viterbi decoder. The main drawback of this detector is that MAI limited. Its performance will serve as a base line for comparison with other detectors. Although in the simulations we use an asynchronous transmission, let us now, for the clarity of explanation, consider a synchronous transmission.

Referring to Fig. 2 there is illustrated in a functional block diagram an iterative multi-user detector (MUD) with a forward error correction (FEC) soft decoder in accordance with an embodiment of the present invention. The iterative MUD decoder of Fig. 2 includes the rake receiver 12, the packet combiner 16, the parallel interference canceller 18 and the SISO decoder 20 of Fig. 1 shown in further detail. A received rake signal is passed through a low pass filter (LPF) 40 before being applied to the rake receiver 12. Detail of the decoder shown for one user (a user 1) which should be understood to have a plurality of similar configurations for decoding with regard to the remaining 2-K users. The rake receiver12 includes a plurality K of M correlators 42 (M fingers for each K users) to provide the initial decoding of the received signal. The output of the correlators are combined in a MRC combiner 16 before input to decoder 20. The decoder 20 includes the de-interleaver 44, an SISO decoder 46, an encoder 48, and the interleaver 50 for each user path 52a to 52k.

Decoder for a particular user e.g., users 1 in Fig. 2 includes a parallel interference cancellation block 18 that include user path 52 b and 52 k and signal regenerators 54 b to 54 k. These regenerate the other signals for subtraction from the rake received signal for user 1 at the adder 56.

The basic idea of the soft output decoding is to obtain soft values, or reliability values of the coded symbols. The initial values for the coded symbols' reliability are all zeros, and hence the first step in this scheme is the computation of the log-likelihood ratio of the crossover probabilities (for a binary symmetric channel), which is called the reliability value of the channel. For a single user transmission case $L_c = 4a \cdot E/N_o$[14]. For the multiuser scenario considered here, we treat MAI as a wide-band noise, and the soft channel output is given by Equation (6):

$$L_c = 2a \frac{E}{\frac{N_0}{2} + \overline{MAI^2}}$$

where E is the signal energy per coded symbol, a is the fading amplitude and $MAI^2$ is the second moment of MAI per coded symbol. The channel reliability values are combined in the first stage packet combiner, and its output is led to the soft input-soft output decoder. The second step in the proposed scheme consists of FEC soft-decision decoding using MAP [14] decision rule. In order to perform soft-decision interference cancellation it is necessary to have reliability of coded symbols. Classical MAP produces reliability of information bits, but it can be easily modified to produce reliability of coded symbols. Denote with $p_{j,m} = \frac{e(L_{j,m})}{1+e(L_{j,m})}$ the probability that the m<sup>th</sup> coded symbol of user j is correctly decoded, where $L_{j,m}$, is the coded symbol reliability after FEC decoding. The mean value for the $m^{th}$ coded symbol of user j is given by $2p_{j,m}$ -1. The signal of the $k^{th}$ user in the $m^{th}$ bit interval at the second stage, after the second combining, and before the final FEC decoding is Equation (7):

$$r_{k,m}^{2st,comb} = \sum_{l=1}^{L_k} \sqrt{E_k^1}\, b_{k,m} + \sum_{l=1}^{L_k} \sum_{\substack{j=1 \\ j\neq k}}^{K} \frac{1}{2} \{\left(\sqrt{E_j^1}\, b_{l,m} - L_k + 1 - \sqrt{\hat{E}_l^1}\, \hat{b}_{j,m} - L_k + 1(2\rho_{j,m} - L_k + 1 - 1)\right) \cdot \left[\left(R_{II,(j,k)}^1 + R_{QQ,(j,k)}^1\right)\cos \ell_{k,j}^1 + (R_{QI,(j,k)}^1)\sin \ell_{k,j}^1\right]\} + \sum_{l=1}^{L_k} n_{k,m} - L_k + 1$$

This signal has improved SNIR relative to the original signal, that is, $\overline{MAI^2}$ is significantly reduced.

Referring to Fig. 3 there is illustrated in a block diagram and iterative MUD with the FEC hard decoder. The components of the decoder in Fig. 3 are similar to those of Fig. 2 except for decoder 46' that is a hard of Viterbi/Turbo decoder.

Input to the hard output Viterbi/Turbo decoder is given by the eq. (5). Hard output after decoding is then encoded and used for interference cancellation in the second stage. After the interference cancellation is performed, signal is combined once again, and before it is sent for the final FEC decoding, it can be represented as Equation (8):

$$r_{k,m}^{2st,comb} = \sum_{l=1}^{L_k} \sqrt{E_k^1}\, b_{k,m} + \sum_{l=1}^{L_k} \sum_{j=1}^{K} \frac{1}{2} \{\left(\sqrt{E_j^1}\, b_{j,m} - L_k + 1 - \sqrt{\hat{E}_j^1}\, \hat{b}_{j,m} - L_k + 1\right) \cdot \left[\left(R_{II,(j,k)}^1 + R_{QQ,(j,k)}^1\right)\cos \varphi_{k,j}^l + (R_{QI,(j,k)}^1)\sin \varphi_{k,j}^1\right]\} + \sum_{l=1}^{L_k} n_{k,m} - L_k + 1$$

where $E_j^1 = (A_j^1 T)^2$ and $\hat{E}_j^1$ *and* $\hat{b}_{j,m} - L_o + l$ are the estimated values of $E_j^1$ and $b_{j,m} - L_k + 1$ and $b_{j.m_}L_k+1$, respectively, obtained for the $l^{th}$ transmission at the $j^{th}$ output of the first stage detector. The motivation for employing the interference cancellation after decoding (and then re-encoding) is that it can provide better tentative symbol estimates, $\hat{b}_{j,m}$, in the first stage and also enable better estimation of the received amplitudes and phases, needed for feedback interference cancellation.

Although in the simulations we use an asynchronous transmission, let us now, for the clarity of explanation, consider a synchronous transmission.

The numerical results that we present are based on Monte Carlo simulations. We consider conventional detector, two-stage detector with hard output Viterbi/Turbo decoding in the first stage and hard interference cancellation, and two-stage detector with soft output MAP decoding in the first stage and soft interference cancellation, all with and without packet combining. The simulation model assumes chip synchronous and bit asynchronous transmission, packet size of 1280 bits, FEC with rate 1/2, constraint length 9 convolutional code, and CRC code C5 from [15]. The considered data bit rate is 128 kbps and the spreading factor per information bit is 8. Channel is Rayleigh fading with Doppler frequency of 83.3 Hz and two equal power paths. All paths are tracked in a RAKE structured receiver with the maximum ratio combining. We employ the coherent detection of BPSK modulated signals with pilot aided detection. In the simulation we include block interleaving, imperfect power control, finite number of quantization levels, imperfect timing and imperfect amplitude and phase estimation.

The fast power control is employed with 1600 updates per second. It compensates for medium to fast fading by measuring the average pilot signal level at the output of the matched filter, and performing appropriate adjustments. The adjustments are implemented as follows: the transmission powers of the users that are 1 [dB] or more under the nominal power level is increased by 1 [dB], while the transmission powers of the users which are 1 [dB] or more over the nominal power level is decreased by 1 [dB]. The nominal signal to noise ratio was chosen to be $E_b/N_o$ = 7[dB].

The 16 level uniform quantization is performed at the matched filters outputs. The quantization step, with respect to the normalized unit energy signal is 0.25. This value is chosen since the statistical analysis of the matched filter outputs showed that the normalized signal values are concentrated in the interval from -2 to +2.

Imperfect timing is included in the simulation model by introducing 1/8 chip timing resolution. When despreading was performed, instead of multiplying the received signal of the desired user by the corresponding spreading sequence with perfectly matched timing, it was multiplied by the shifted version of the same sequence. The shift was chosen to be a random number, taking the values 0, 1/64, 1/48, 1/32, and 1/16 of the chip interval with equal probabilities.

In order to obtain better amplitude estimates in the Rayleigh fading channel, the single amplitude estimates, obtained from the matched filter outputs after the interference cancellation, were averaged over 150 consecutive realizations.

In Fig. 4 we present throughput as a function of number of active users. The results are obtained under realistic assumptions that include all previously mentioned imperfections: imperfect power control, imperfect amplitude, phase and timing estimation, block interleaving, and finite number of quantization levels. It can be seen that combining increases robustness of all considered detectors. The best performance is achieved with the scheme involving packet combining and two-stage detector with soft interference cancellation. At the throughput of 0.5, soft interference cancellation with packet combining offers a gain of about 60% over soft interference cancellation, 50% and 130% over conventional detector with and without packet combining, respectively, and 40% and 75% over hard interference cancellation, with and without packet combining, respectively.

In order to investigate the influence of the implementation imperfections, we simulated the system assuming the perfect amplitude, phase and timing knowledge and infinite level quantization at the receiver side. The results, shown in Fig. 5, indicate that improvements, due to employment of packet combining in conjunction with MUD, are even greater when imperfections are not present. Again, two-stage detector with soft interference cancellation and packet combining exhibits the best performance. Note that now two-stage detector with hard interference cancellation and packet combining is better for the whole range of considered parameters than the conventional detector with packet combining, while it was not the case when imperfections are included. The reason for such behavior is in the fact that when the number of active users increases in the system with imperfections, and therefore MAI increases, it causes the decrease in quality of parameter estimation, and high error rate of the tentative decisions in the first stage. Thus, these two effects lead to the inaccurate or totally erroneous interference cancellation, resulting in the MAI increase.

Referring to Fig. 6 there is graphically illustrated bit error rates for the embodiment of Fig. 1 compared to a typical rake receiver as a function of number of users per sector.

Referring to Fig. 7 there is graphically illustrated packet error rates for various embodiments of the present invention compared to a typical rake receiver as a function of users per sector. The embodiments can provide more users capacity in the sector.

Referring to Fig. 8 there is illustrated the iterative MUD with soft decoder of Fig. 2, coupled to a single antenna. The single antenna 60 is coupled to a low pass filter 40.

Referring to Fig. 9 there is illustrated the iterative MUD with soft decoder of Fig. 2, coupled to a plurality of antennas. The configuration of Fig. 9 includes a plurality of antennas 60 and 60' each coupled to a corresponding plurality of low pass filters 40 and 40' and a plurality of rake receivers 42 and 42'. The output of the rake receivers are applied to a maximum ratio combined 16 for each user when - 1 to K. While Fig. 9 shows a plurality of two antennas, the principle is easily extended to greater plurality of antennas.

In accordance with embodiments of the present invention we provided, simulated and analyzed the receiver employing jointly packet combining and multiuser detection. Frequency selective Rayleigh fading channel, FEC and asynchronous transmission, with and without system implementation imperfections, have been considered. We have provided two embodiments: two-stage detection of combined packets with soft and hard interference cancellation. The first embodiment involves soft input/soft output MAP decoding of the combined packets in the first stage, and the soft interference cancellation in the second stage. In the second embodiment we use the hard decision Viterbi/Turbo decoding to decode combined packets in the first stage, and hard interference cancellation in the second stage. Simulations have shown that the present embodiments with MUD and packet combining can achieve considerable performance gains compared to their counterparts without packet combining, as well as conventional detector with and without packet combining. As the number of active users increases, the throughput of the detectors without packet combining drops rapidly to zero, while in conjunction with packet combining they achieve significant throughput, and therefore considerably improve system robustness. The best performance is achieved by the two-stage detector with soft interference cancellation and packet combining. The advantage of multiuser detection over the conventional detection is even more pronounced when they are employed with packet combining, and when system imperfections are not present.

According to embodiments of the present invention, the apparatus is provided for detection of performance in multiuser communications, having a multiuser detection device and a packet combining device which is coupled with the multiuser detection device.

The multiuser detection device includes a receiving device for receiving users' data (e.g. the rake receiver 12 of Figures 1-3 and 8-9), which includes a device to demodulate jointly users' data by exploiting the structure of multiuser interference.

The packet combining device has an enhancement device to enhance standard automatic repeat request protocol. The enhancement device has a device for preserving erroneous packets without discarding and a device for combining the preserved packets with retransmitted packets, thereby improving new decisions.

The apparatus may have a two-stage detection device that includes first and second stage detectors as shown in Figures 1-3 and 8-9.

The first stage detector has a decision device for making a tentative decision on interference cancellation, which has a packet combining device (e.g. the combiner 16), and a decoding device (e.g. the decoder 20).

The second stage detector has a device for receiving decoded output provided by the decoding device of the first stage detector, so as to cancel the interference. The second stage detector further has a device (e.g. the combiner 24) to combine the received decoded outputs before final decoding (e.g. decoder 26).

The apparatus as described above may be used for asynchronous transmission and coherent detection in Rayleigh fading channel, with forward error correction.

The first stage decoder may have a device to perform soft input/soft output Maximum A Posteriori Probability decoding (e.g. the SISO decoder 20). The second stage detector may have a device to perform soft interference cancellation. The decoder may have a device to perform hard decision Viterbi/Turbo decoding. The second stage detector may have a device for performing hard interference cancellation.

## References

[1] B.A.Harvey and S.B. Wicker,"Packet combining systems based on the Viterbi decoder," IEEE Trans. Commun., vol. 42, NO. 2/3/4, pp. 1544-1557, Feb./Mar./Apr. 1994.

[2] S.B.Wicker, "Adaptive rate error control through the use of diversity combining and majority-logic decoding in a hybrid-ARQ protocol," IEEE Trans.Commun., vol.39, NO.3, pp. 380-385, Mar. 1991.

[3] J. J. Metzner and D. Chang, "E¢cient selective repeat ARQ strategies for very noisy and ‡actuating channels," IEEE Trans. Commun., vol. COM-33, NO. 5, pp. 409-415, May 1985.

[4] D. Chase, "Code combining- A maximum-likelihood decoding approach for combining of an arbitrary number of noisy packets," IEEE Trans. Commun., vol. COM-33, pp. 385-393, May 1985.

[5] J. Hagenauer, "Rate-compatible punctured convolutional codes (RCPC codes) and their ap-plications," IEEE Trans. Commun., vol. 36, NO. 4, pp. 389-400, Apr. 1988.

[6] S. Kallel and D. Haccoun, "Generalized type II hybrid ARQ scheme using punctured convo-lutional coding," IEEE Trans. Commun., vol. 38, NO. 11, pp. 1938-1946, Nov. 1990.

[7] S. Verdu, "Recent progress in multiuser detection," Proc. 1988 Int. Conf. Advances in Communications and Control Systems, 1:66-77, Oct. 1988.

[8] A. Duel-Hallen, J. Holtzman and Z. Zvonar, "Multiuser detection for CDMA systems," IEEE Personal Commun., pp. 46-58, April 1995.

[9] S. Verdu, "Minimum probability of error for asynchronous Gaussian multiple access channel," IEEE Trans. on Info. Theory, vol. IT-32, NO. 1, pp. 85-96, Jan 1986.

[10] R. Lupas and S. Verdu, "Linear multiuser detectors for synchronous CDMA channel," IEEE Trans. on Info. Theory, vol. IT-35, NO. 1, pp. 123-136, Jan. 1989.

[11] U. Madhow and M. Honig, "MMSE interference suppression for direct sequence spread spec-trum CDMA," IEEE Trans. Commun., vol. 42, pp. 3178-3188, Dec. 1994.

[12] M. K. Varanasi and B. Aazhang, "Multistage detection in asynchronous code division multiple access communications." IEEE Trans. Commun., vol. COM-38, NO. 4, pp, 509-519, Apr. 1990.

[13] M. K. Varanasi and B. Aazhang, "Near Optimum Detection in Synchronous Code-Division Multiple-Access Systems", IEEE Trans. Commun., vol. 39, pp. 725-736, Apr. 1991.

[14] Joachim Hagenauer, Elke O¤er and Lutz Papke, "Iterative Decoding of Binary Block and Convolutional Codes", IEEE Transactions on Information Theory, vol. 42, no. 2, pp. 429-445, March 1996.

[15] G. Castagnoli, J. Ganz and P. Graber, "Optimum cyclic redundancy-check codes with 16-bit redundancy," IEEE Trans. Commun., vol. COM-38, Jan. 1990.

## Claims

**1.** A multi-user detector for wireless communications comprising:

a first stage having a first packet combiner (16) and a first decoder (20); and
a second stage having a second packet combiner coupled to the output of the first decoder (24) and a second decoder (26).

**2.** A multi-user detector as claimed in claim 1 wherein the first stage includes a rake receiver (12) whose output is coupled to the first packet combiner (16).

**3.** A multi-user detector as claimed in claim 1 wherein the first stage includes an interference canceller (18) whose output is coupled to the second packet combiner (24).

**4.** A multi-user detector as claimed in claim 1 wherein the first decoder (20) is a hard decoder.

**5.** A multi-user detector as claimed in claim 4 wherein the first decoder (20) is a Viterbi/Turbo decoder.

**6.** A multi-user detector as claimed in claim 3 wherein the first decoder (20) is a soft decoder:

**7.** A multi-user detector as claimed in claim 6 wherein the first decoder (20) is a maximum a posteriori probability decoder.

**8.** A multi-user detector as claimed in claim 7 wherein the first decoder includes outputs for probability values that are coupled to the interference canceller (18).

**9.** A method for detecting performance in multi-user communications, the method comprising the steps of:

a first stage detection step and a second stage detection step;
the first stage detection step including the steps of packet combining using a first packet combiner and decoding using a first decoder (20);
the second stage detection step including the steps of packet combining using a second packet combiner coupled to the output of the first decoder and decoding using a second decoder (26).

**10.** The method of Claim 9, wherein the first stage detection step further comprises the step of making a tentative decision on interference cancellation.

11. The method of Claim 10, wherein the decision step makes a decision based on packet combining and decoding.

12. The method of Claim 11, wherein the second stage detection step comprises the step of receiving decoded output provided by the decoding step of the first stage detection step, so as to cancel the interference.

13. The method of Claim 12, wherein the packet combining of the second stage detection step comprises the step of combining the received decoded outputs before final decoding.

14. The method of Claim 9 used for asynchronous transmission and coherent detection in Rayleigh fading channel, with forward error correction.

15. The method of Claim 14, wherein the decoding step of the first stage detection step comprises the step of performing soft input/soft output Maximum A Posteriori Probability decoding.

16. The method of Claim 14, wherein the decoding step of the second stage detection step comprises the step of performing soft interference cancellation.

17. The method of Claim 13, wherein the decoding step of the first stage detection step comprises the step of performing the hard decision Viterbi/Turbo decoding.

18. The method of Claim 17, wherein the second stage detection step comprises the step of performing hard interference cancellation.

## Patentansprüche

1. Mehrbenutzer-Detektor für drahtlose Kommunikation, mit:

   eine ersten Stufe, die einen ersten Paket-Kombinierer (16) und einen ersten Decodierer (20) aufweist; und einer zweiten Stufe, die einen zweiten Paket-Kombinierer (24), der mit dem Ausgang des ersten Decodierers gekoppelt ist, und einen zweiten Decodierer (26) aufweist.

2. Mehrbenutzer-Detektor nach Anspruch 1, bei dem die erste Stufe einen Rake-Empfänger (12) einschließt, dessen Ausgang mit dem ersten Paket-Kombinierer (16) gekoppelt ist.

3. Mehrbenutzer-Detektor nach Anspruch 1, bei dem die erste Stufe eine Störungs-Kompensations-Einrichtung (18) einschließt, deren Ausgang mit dem zweiten Paket-Kombinierer (24) gekoppelt ist.

4. Mehrbenutzer-Detektor nach Anspruch 1, bei dem der erste Decodierer (20) ein harter Decodierer ist.

5. Mehrbenutzer-Detektor nach Anspruch 4, bei dem der erste Decodierer (20) ein Viterbi/Turbo-Decodierer ist.

6. Mehrbenutzer-Detektor nach Anpruch 3, bei dem der erste Decodierer (20) ein weicher Decodierer ist.

7. Mehrbenutzer-Detektor nach Anspruch 6, bei dem der erste Decodierer (20) ein Decodierer für eine maximale nachträgliche Wahrscheinlichkeit ist.

8. Mehrbenutzer-Detektor nach Anspruch 7, bei dem der erste Decodierer Ausgänge für Wahrscheinlichkeitswerte einschließt, die mit der Störungs-Kompensations-Einrichtung (18) gekoppelt sind.

9. Verfahren zur Feststellung des Betriebsverhaltens in Mehrbenutzer-Kommunikationen, wobei das Verfahren die folgenden Schritte umfasst:

   einen Erststufen-Detektionsschritt und einen Zweitstufen-Detektionsschritt;
   wobei der Erststufen-Detektionsschritt die Schritte des Paket-Kombinierens unter Verwendung eines ersten Paket-Kombinierers und der Decodierung unter Verwendung eines ersten Decodierers (20) einschließt;
   wobei der Zweitstufen-Detektionsschritt die Schritte des Paket-Kombinierens unter Verwendung eines zweiten Paket-Kombinierers, der mit dem Ausgang des ersten Decodierers gekoppelt ist, und der Decodierung unter Verwendung eines zweiten Decodierers (26) einschließt.

10. Verfahren nach Anspruch 9, bei dem der Erststufen-Detektionsschritt weiterhin den Schritt der Durchführung einer versuchsweisen Entscheidung über die Stör-Kompensation umfasst.

11. Verfahren nach Anspruch 10, bei dem der Entscheidungsschritt eine Entscheidung auf der Grundlage des Paket-Kombinierens und des Decodierens trifft.

12. Verfahren nach Anspruch 11, bei dem der Zweitstufen-Detektionsschritt den Schritt des Empfangens des decodierten Ausganges, der von dem Decodierungsschritt des Erststufen-Detektionsschrittes geliefert wird, umfasst, um die Störung zu kompensieren.

13. Verfahren nach Anspruch 12, bei dem das Paket-Kombinieren des Zweitstufen-Detektionsschrittes den Schritt des Kombinierens der empfangenen decodierten Ausgänge vor der abschließenden Decodierung umfasst.

14. Verfahren nach Anspruch 9, das für die asynchrone Übertragung und kohärente Detektion in einem Rayleigh-Schwund-Kanal mit Vorwärtsfehler Korrektur verwendet wird.

15. Verfahren nach Anspruch 14, bei dem der Decodierungsschritt des Erststufen-Detektionsschrittes den Schritt der Ausführung einer weichen Eingangs/weichen Ausgangs-Decodierung mit einer maximalen nachträglichen Wahrscheinlichkeit umfasst.

16. Verfahren nach Anspruch 14, bei dem der Decodierungsschritt des Zweitstufen-Detektionsschrittes den Schritt der Durchführung einer weichen Stör-Kompensation umfasst.

17. Verfahren nach Anspruch 13, bei dem der Decodierungsschritt des Erststufen-Detektionsschrittes den Schritt der Ausführung einer Viterbi/Turbo-Decodierung mit harter Entscheidung umfasst.

18. Verfahren nach Anspruch 17, bei dem der Zweitstufen-Detektionsschritt den Schritt der Durchführung einer harten Stör-Kompensation umfasst.

## Revendications

1. Un détecteur multi-utilisateur pour des communications sans fil comprenant :

   un premier étage ayant un premier dispositif de combinaison de paquets (16) et un premier décodeur (20); et un deuxième étage ayant un deuxième dispositif de combinaison de paquets (24) couplé à la sortie du premier décodeur, et un deuxième décodeur (26).

2. Un détecteur multi-utilisateur selon la revendication 1, dans lequel le premier étage comprend un récepteur Rake (12) dont la sortie est couplée au premier dispositif de combinaison de paquets (16).

3. Un détecteur multi-utilisateur selon la revendication 1, dans lequel le premier étage comprend un annuleur de brouillage (18) dont la sortie est couplée au deuxième dispositif de combinaison de paquets (24).

4. Un détecteur multi-utilisateur selon la revendication 1, dans lequel le premier décodeur (20) est un décodeur dur (hard).

5. Un détecteur multi-utilisateur selon la revendication 4, dans lequel le premier décodeur (20) est un décodeur de type Viterbi / Turbo.

6. Un détecteur multi-utilisateur selon la revendication 3, dans lequel le premier décodeur (20) est un décodeur souple (soft).

7. Un détecteur multi-utilisateur selon la revendication 6, dans lequel le premier décodeur (20) est un décodeur à probabilité a posteriori maximale.

**8.** Un détecteur multi-utilisateur selon la revendication 7, dans lequel le premier décodeur comprend des sorties pour des valeurs de probabilités qui sont couplées à l'annuleur de brouillage (18).

**9.** Un procédé pour améliorer les performances de détection dans des communications multi-utilisateurs, le procédé comprenant les étapes suivantes :

une étape de détection d'un premier étage et une étape de détection d'un deuxième étage;
l'étape de détection du premier étage incluant les étapes de combinaison de paquets en utilisant un premier dispositif de combinaison de paquets, et de décodage en utilisant un premier décodeur (20);
l'étape de détection du deuxième étage incluant les étapes de combinaison de paquets en utilisant un deuxième dispositif de combinaison de paquets couplé à la sortie du premier décodeur, et de décodage en utilisant un deuxième décodeur (26).

**10.** Le procédé selon la revendication 9, dans lequel l'étape de détection du premier étage comprend en outre l'étape consistant à prendre une décision provisoire sur l'annulation de brouillage.

**11.** Le procédé selon la revendication 10, dans lequel l'étape de décision prend une décision sur la base de la combinaison de paquets et du décodage.

**12.** Le procédé selon la revendication 11, dans lequel l'étape de détection du deuxième étage comprend l'étape consistant à recevoir une information de sortie décodée fournie par l'étape de décodage de l'étape de détection du premier étage, de façon à annuler le brouillage.

**13.** Le procédé selon la revendication 12, dans lequel la combinaison de paquets de l'étape de détection du deuxième étage comprend l'étape consistant à combiner les informations de sortie décodées reçues, avant le décodage final.

**14.** Le procédé selon la revendication 9, utilisé pour la transmission asynchrone et la détection cohérente dans un canal affecté d'évanouissement de Rayleigh, avec correction d'erreur par code correcteur.

**15.** Le procédé selon la revendication 14, dans lequel l'étape de décodage de l'étape de détection du premier étage comprend l'étape consistant à effectuer un décodage à Probabilité A Posteriori Maximale avec entrée souple / sortie souple.

**16.** Le procédé selon la revendication 14, dans lequel l'étape de décodage de l'étape de détection du deuxième étage comprend l'étape consistant à effectuer une annulation de brouillage souple.

**17.** Le procédé selon la revendication 13, dans lequel l'étape de décodage de l'étape de détection du premier étage comprend l'étape consistant à effectuer le décodage de type Viterbi / Turbo à décision dure.

**18.** Le procédé selon la revendication 17, dans lequel l'étape de détection du deuxième étage comprend l'étape consistant à effectuer une annulation de brouillage dure.

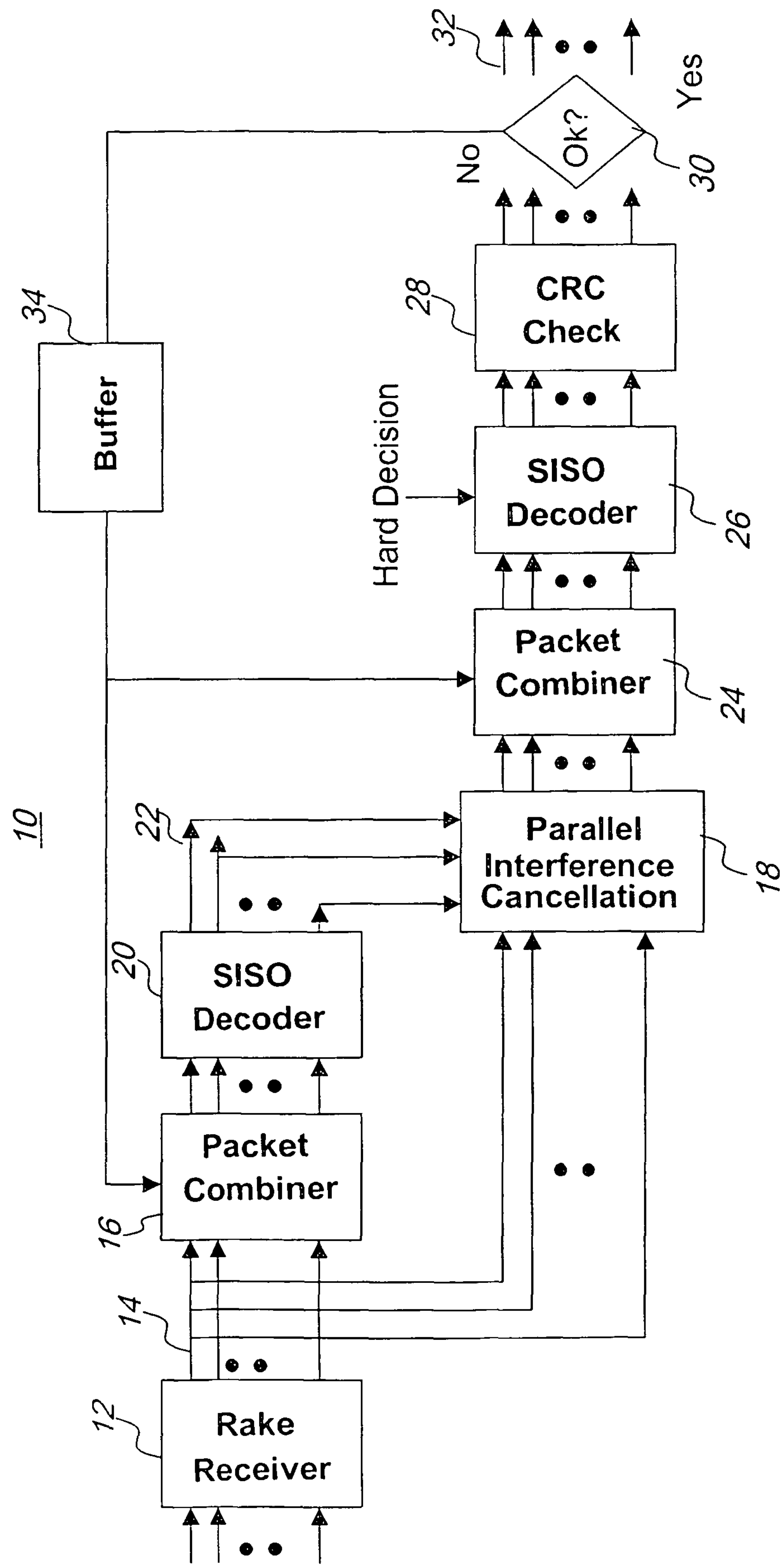
10
Rake Receiver
12
14
Packet Combiner
16
SISO Decoder
20
22
Parallel Interference Cancellation
18
Packet Combiner
24
SISO Decoder
26
Hard Decision
CRC Check
28
Ok?
30
No
Yes
32
Buffer
34

Fig. 1

Fig. 2

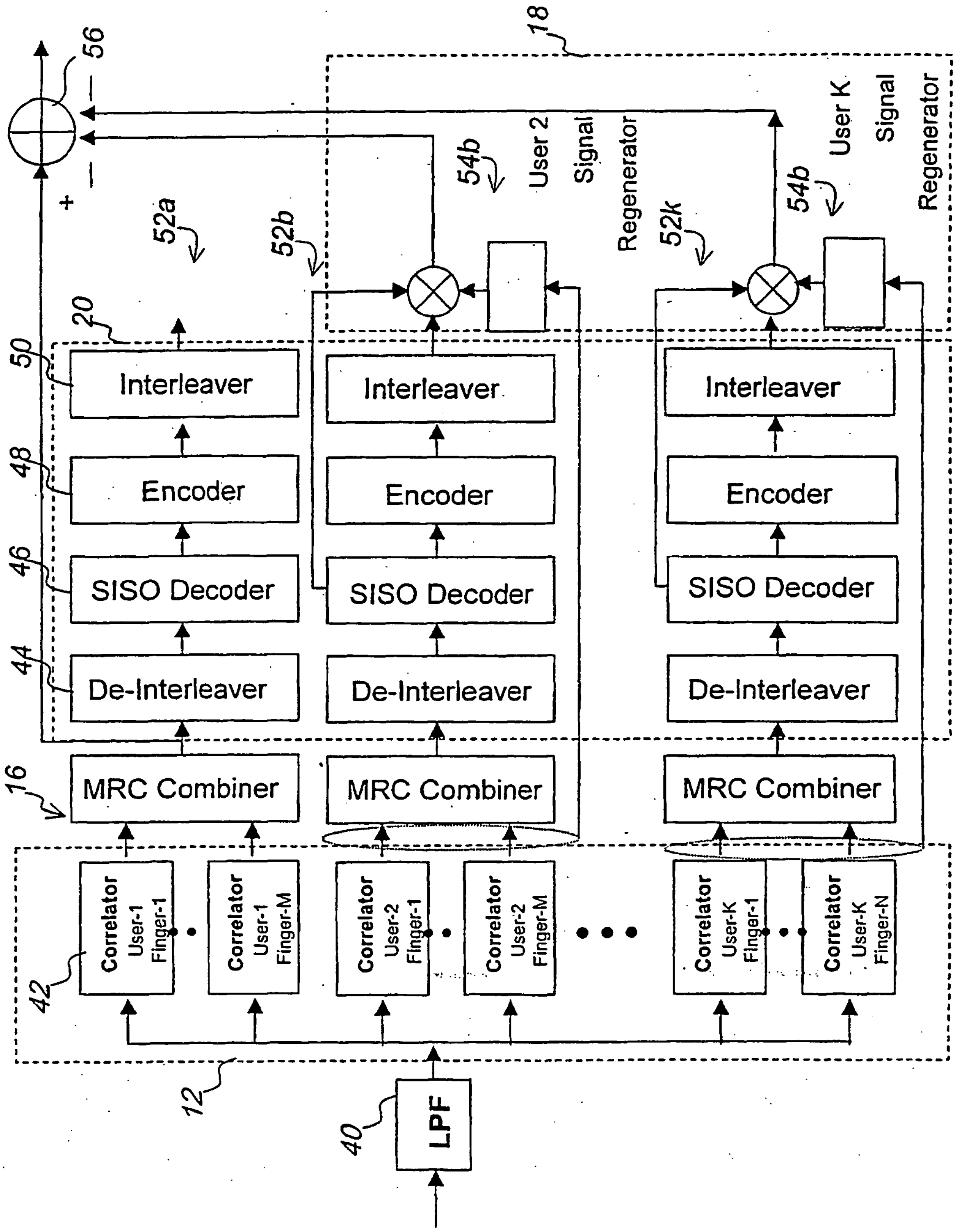
56
18
User 2 Signal Regenerator
User K Signal Regenerator
54b
52a
52b
52k
20
50
48
46
44
Interleaver
Encoder
SISO Decoder
De-Interleaver
MRC Combiner
16
Correlator User-1 Finger-1
Correlator User-1 Finger-M
Correlator User-2 Finger-1
Correlator User-2 Finger-M
Correlator User-K Finger-1
Correlator User-K Finger-N
42
12
40
LPF
+
−

Fig. 3

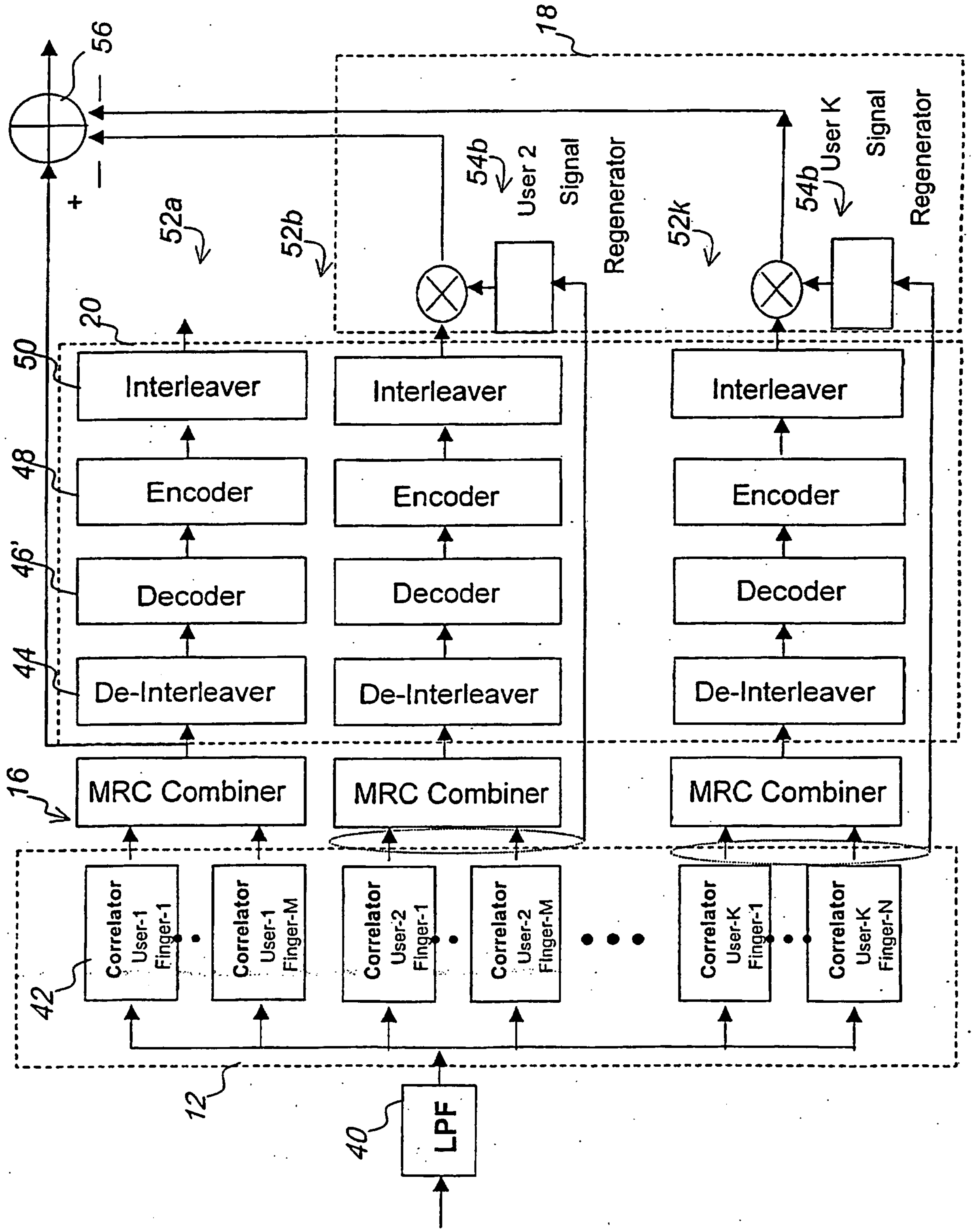
56
18
+
−
−
User 2
Signal
Regenerator
54b
User K
Signal
Regenerator
54b
52a
52b
52k
20
50
Interleaver
Interleaver
Interleaver
48
Encoder
Encoder
Encoder
46'
Decoder
Decoder
Decoder
44
De-Interleaver
De-Interleaver
De-Interleaver
16
MRC Combiner
MRC Combiner
MRC Combiner
42
Correlator User-1 Finger-1
Correlator User-1 Finger-M
Correlator User-2 Finger-1
Correlator User-2 Finger-M
Correlator User-K Finger-1
Correlator User-K Finger-N
12
40
LPF

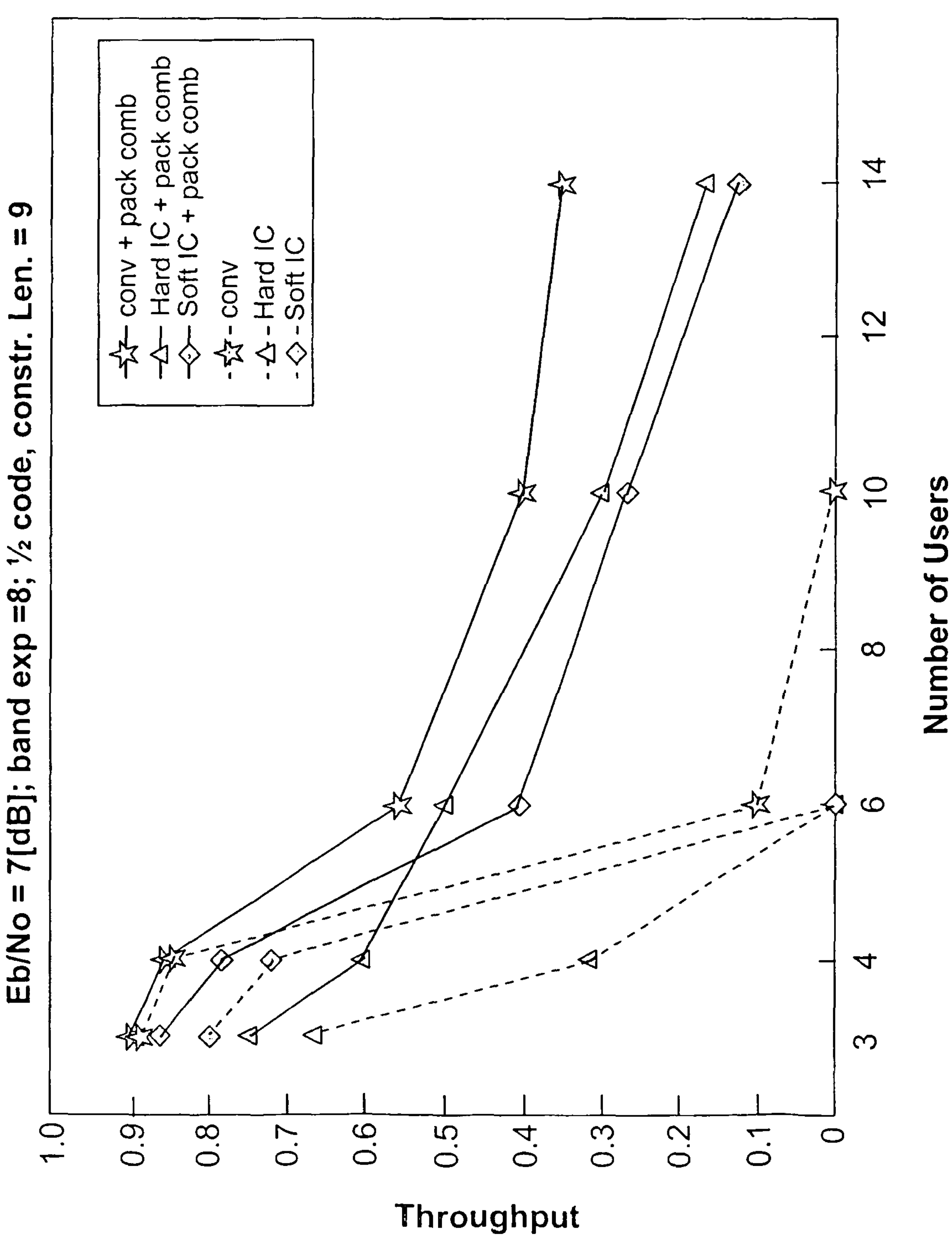
Eb/No = 7[dB]; band exp =8; ½ code, constr. Len. = 9
conv + pack comb
Hard IC + pack comb
Soft IC + pack comb
conv
Hard IC
Soft IC
Throughput
1.0
0.9
0.8
0.7
0.6
0.5
0.4
0.3
0.2
0.1
0
Number of Users
3
4
6
8
10
12
14

Fig. 4

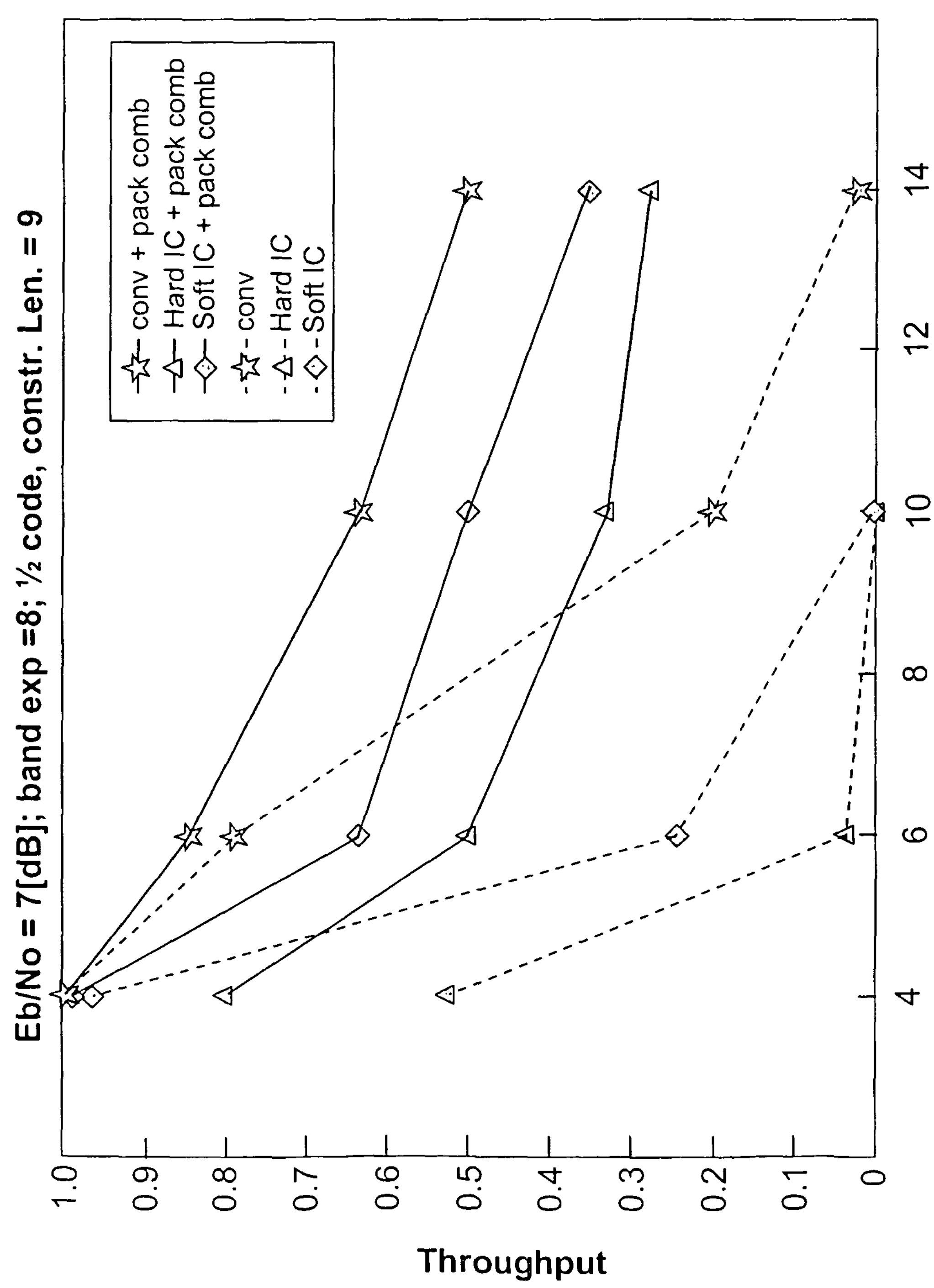
Eb/No = 7[dB]; band exp =8; ½ code, constr. Len. = 9
conv + pack comb
Hard IC + pack comb
Soft IC + pack comb
conv
Hard IC
Soft IC
Throughput
1.0
0.9
0.8
0.7
0.6
0.5
0.4
0.3
0.2
0.1
0
Number of Users
4
6
8
10
12
14

Fig. 5

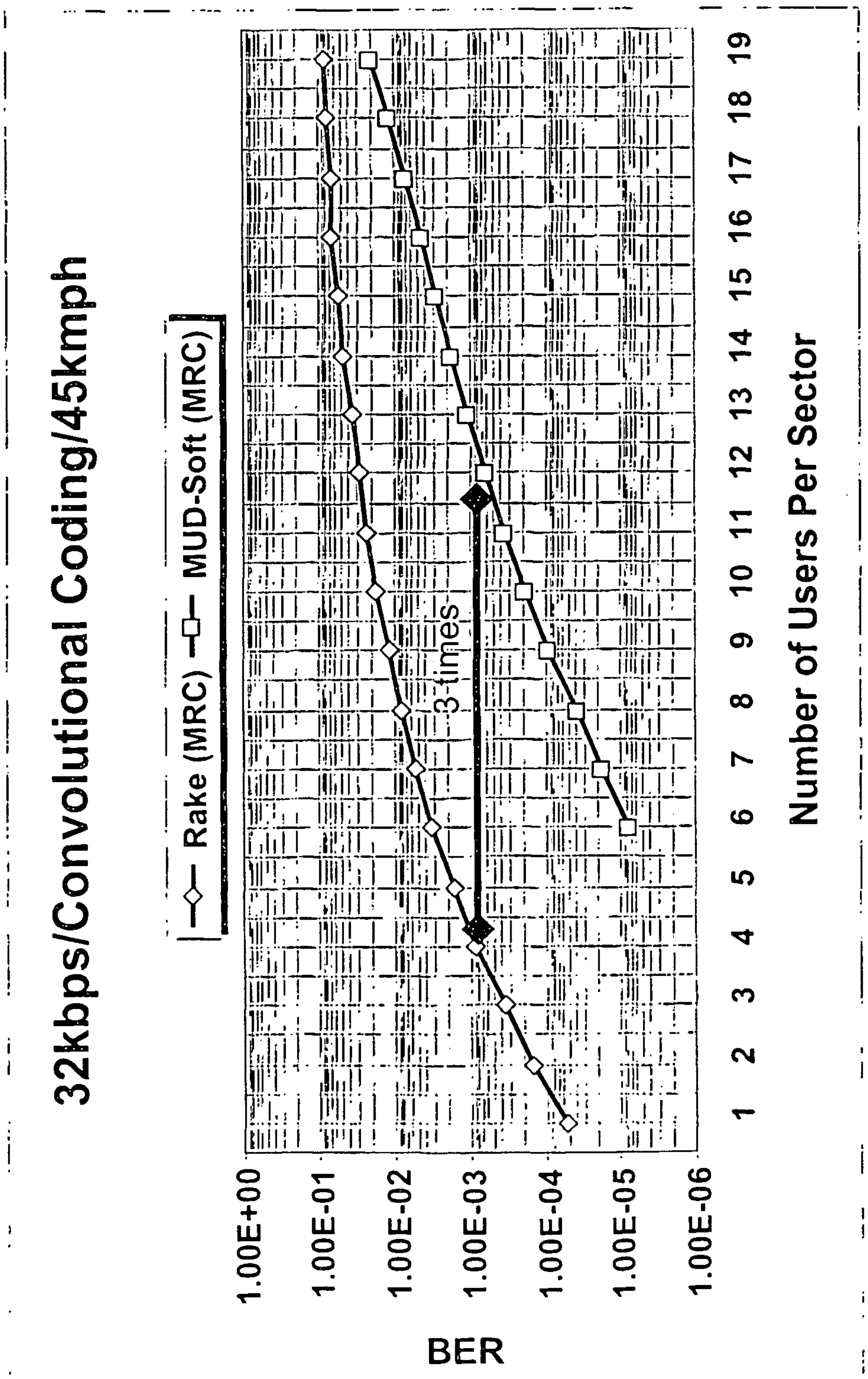
32kbps/Convolutional Coding/45kmph
Rake (MRC)
MUD-Soft (MRC)
3 times
BER
1.00E+00
1.00E-01
1.00E-02
1.00E-03
1.00E-04
1.00E-05
1.00E-06
Number of Users Per Sector
1 2 3 4 5 6 7 8 9 10 11 12 13 14 15 16 17 18 19

Fig. 6

Fig. 7

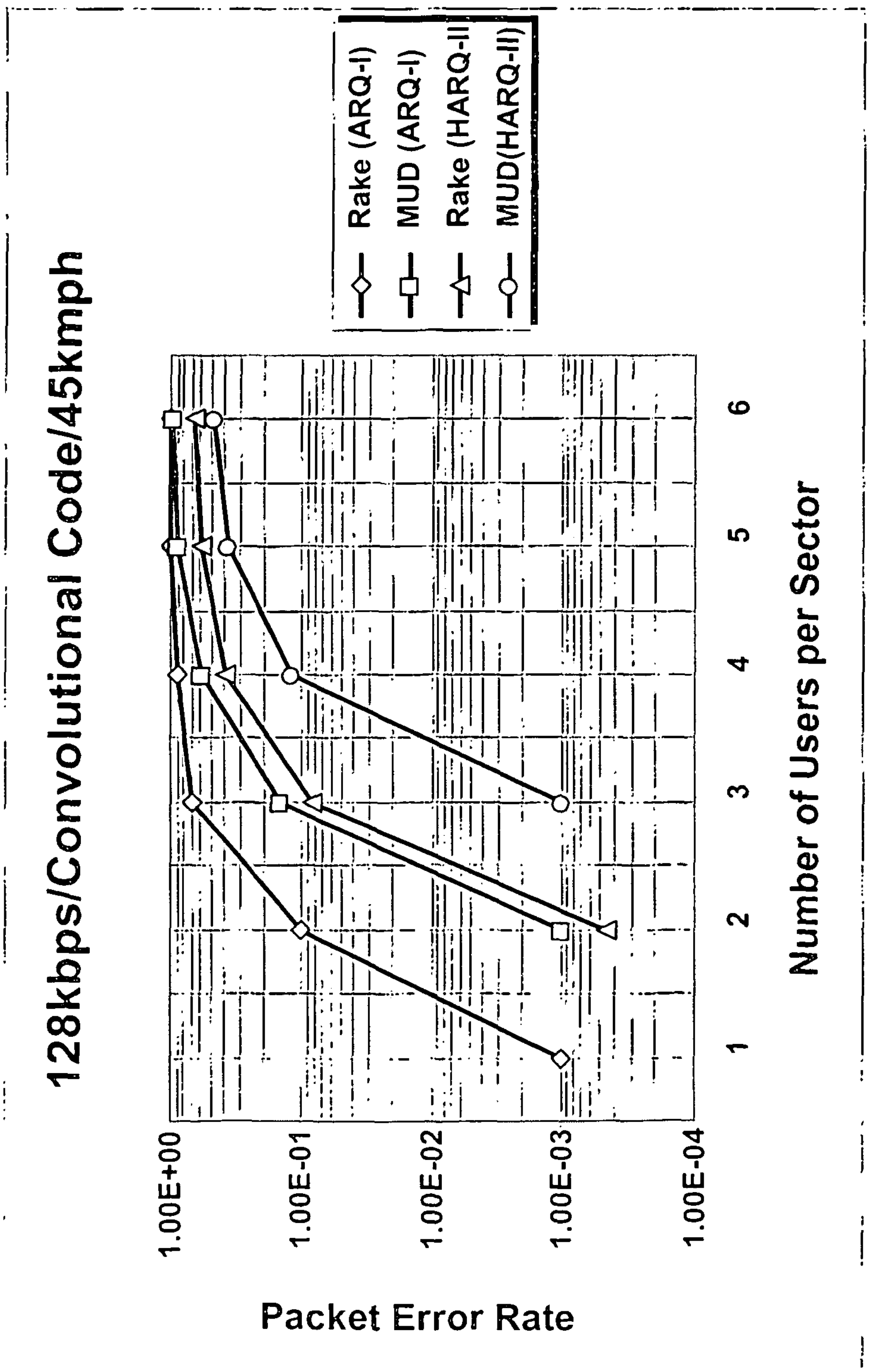
128kbps/Convolutional Code/45kmph
Packet Error Rate
1.00E+00
1.00E-01
1.00E-02
1.00E-03
1.00E-04
1
2
3
4
5
6
Number of Users per Sector
Rake (ARQ-I)
MUD (ARQ-I)
Rake (HARQ-II
MUD(HARQ-II)

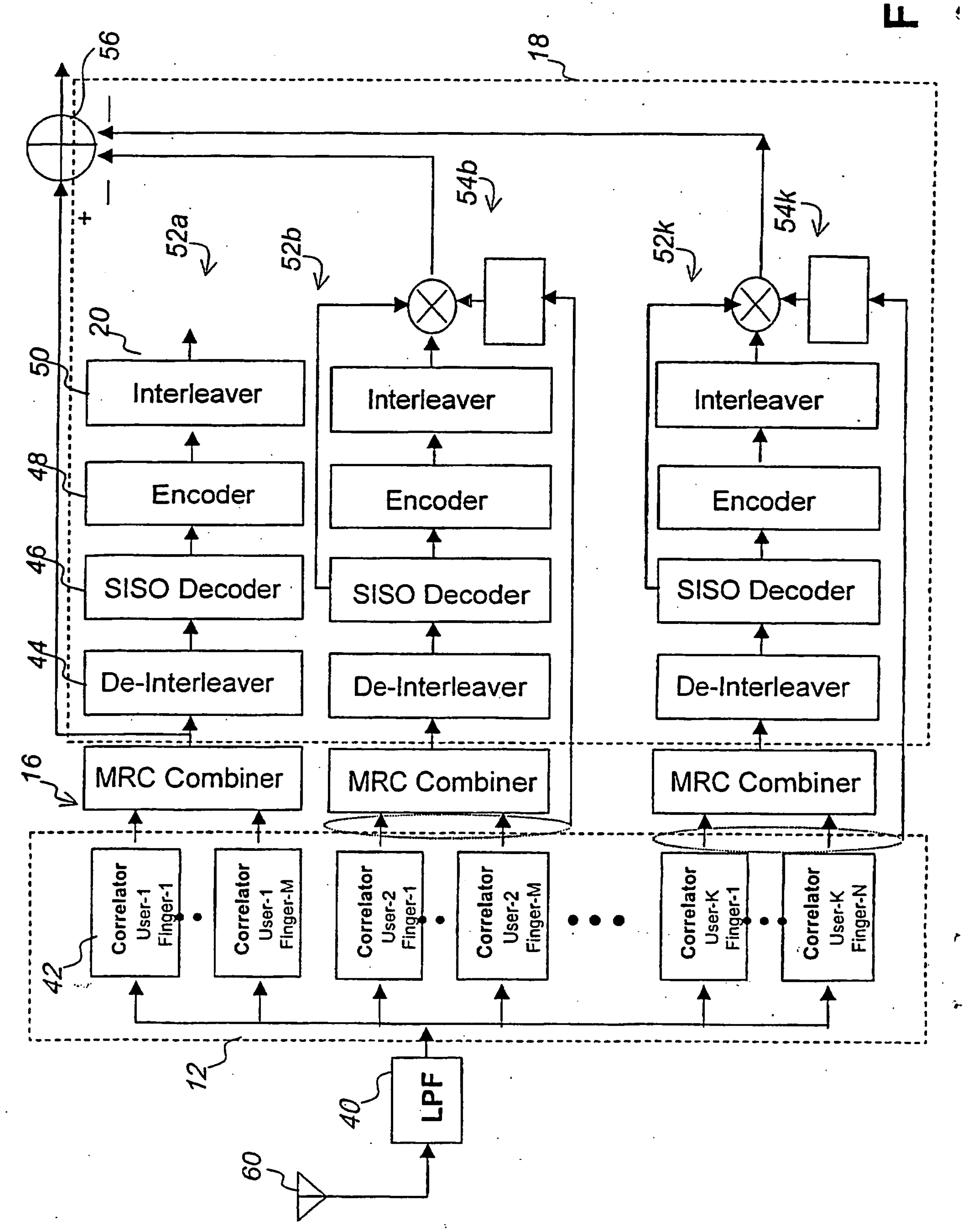
56
18
54b
54k
52a
52b
52k
20
50
48
46
44
16
42
12
40
60
+
−
−
Interleaver
Interleaver
Interleaver
Encoder
Encoder
Encoder
SISO Decoder
SISO Decoder
SISO Decoder
De-Interleaver
De-Interleaver
De-Interleaver
MRC Combiner
MRC Combiner
MRC Combiner
Correlator User-1 Finger-1
Correlator User-1 Finger-M
Correlator User-2 Finger-1
Correlator User-2 Finger-M
Correlator User-K Finger-1
Correlator User-K Finger-N
LPF

Fig. 8

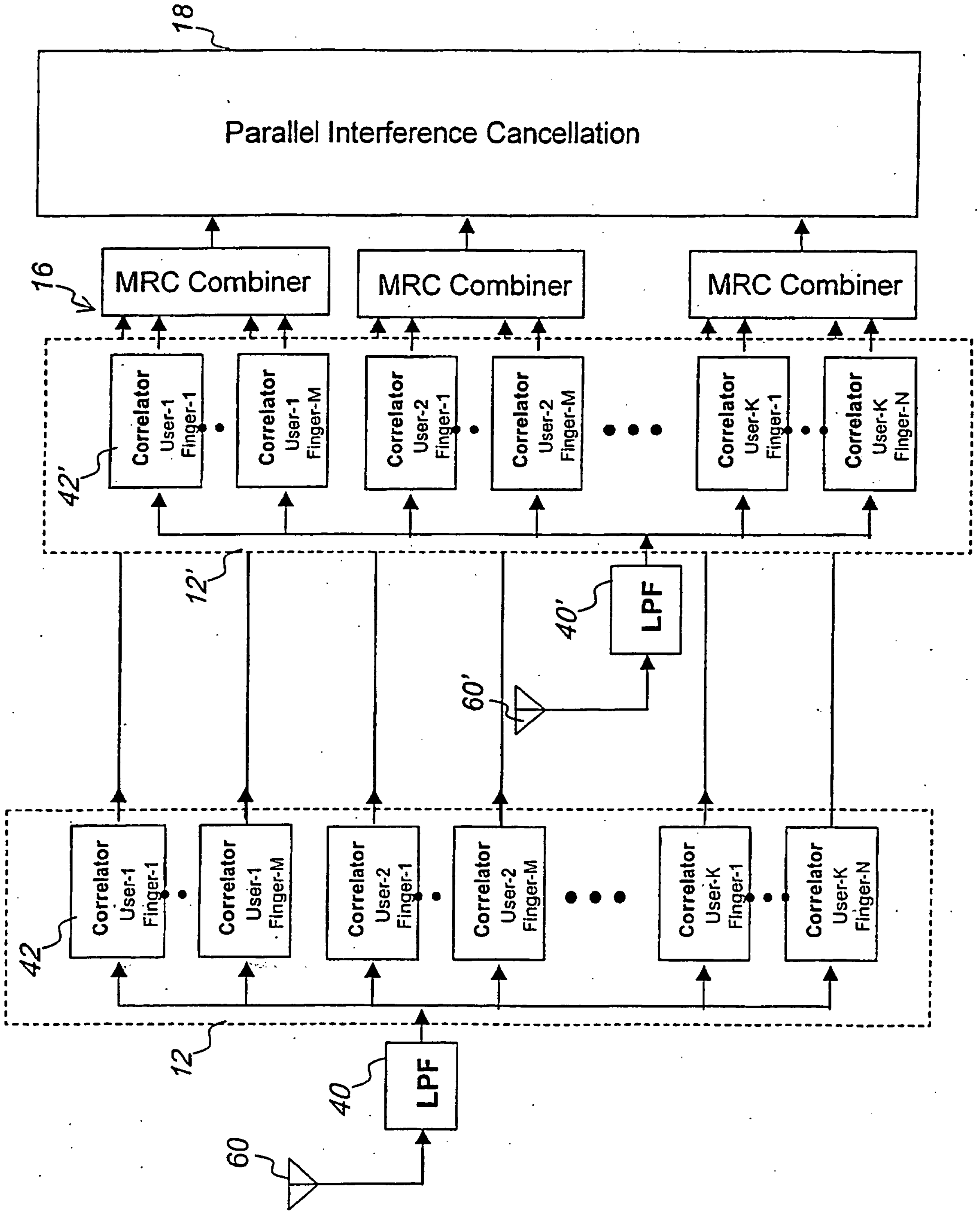
18
Parallel Interference Cancellation
16
MRC Combiner
MRC Combiner
MRC Combiner
42'
Correlator User-1 Finger-1
Correlator User-1 Finger-M
Correlator User-2 Finger-1
Correlator User-2 Finger-M
Correlator User-K Finger-1
Correlator User-K Finger-N
12'
40'
LPF
60'
42
Correlator User-1 Finger-1
Correlator User-1 Finger-M
Correlator User-2 Finger-1
Correlator User-2 Finger-M
Correlator User-K Finger-1
Correlator User-K Finger-N
12
40
LPF
60

Fig. 9